# EUROPEAN PATENT SPECIFICATION

(11) **EP 0 395 202 B1**
(45) Date of publication and mention of the grant of the patent: **16.10.1996**
(21) Application number: 90302356.2
(22) Date of filing: 06.03.1990
(51) Int. Cl.: B41J 2/435

(54) **Output apparatus**
Ausgabegerät
Appareil de sortie

(30) Priority: 07.03.1989 JP 52911/89
(43) Date of publication of application: 31.10.1990
(60) Divisional application: 96200032.9
(73) Proprietor: CANON KABUSHIKI KAISHA, Tokyo (JP)
(72) Inventor: Nakajima, Nobuyuki, Kawasaki-shi, Kanagawa-ken (JP)
(74) Representative: Beresford, Keith Denis Lewis

(56) References cited:
- EP-A- 0 042 071
- PATENT ABSTRACTS OF JAPAN vol. 11, no. 341 (E-554)(2788), 7 November 1987; & JP-A-62120775 (RICOH) 02.06.1987
- PATENT ABSTRACTS OF JAPAN vol. 12, no. 150 (E-606)(2997) 10 Mai 1988; & JP-A-6226757 (RICOH) 17.11.1987

## Description

### BACKGROUND OF THE INVENTION

### Field of the Invention

The present invention relates to an output apparatus and, more particularly, to an output apparatus using a cache memory to realize a character output.

### Related Background Art

Hitherto, in many printing apparatuses, for instance, when a vector character is output, the vector character is developed in a bit map on the basis of the character information of the vector character and is temporarily written into a cache memory. Since there is a limitation in the capacity of the cache memory, when the memory area lacks or after the elapse of a predetermined time or the like, the cache memory is initialized for the next use.

However, in the conventional apparatus, since the rewriting and clearing processes of the cache memory are executed asynchronously with the printing operation of the printing apparatus, for instance, in the case where a paper jam occurs in the printing apparatus and the page must be again formed, it is necessary to again execute the processes from the development of a bit map into the cache memory.

Japanese Patent Abstract No. JP-A-62,264,757 discloses a copier having a buffer memory for picture data.

According to one aspect of the present invention there is provided an output apparatus comprising:
memory means for storing coordinate point data defining a pattern;
conversion means for converting the coordinate point data stored in said memory means into dot pattern data; and
storage means for storing the dot pattern data for subsequent output by the apparatus, and characterised in that the apparatus additionally comprises temporary storage means for temporarily storing dot pattern data converted by said conversion means, and means for transferring dot pattern data stored in said temporary storage means to a predetermined area of said storage means in the event that the dot pattern was not properly output from said apparatus due to jamming of said apparatus.

According to a second aspect of the present invention, there is provided a method of outputting data from an apparatus comprising the steps of:
converting coordinate point data indicative of a pattern into dot pattern data;
temporarily storing the converted dot pattern data; and
storing in storage means the converted dot pattern data for subsequent output by the apparatus, and characterised in that
the temporarily stored dot pattern data is transferred to the storage means in order to reconstruct the dot pattern in a predetermined area in a storage means in the event that the dot pattern was not properly output from the apparatus due to jamming in the apparatus.

How the invention may be carried out will now be described by way of example only and with reference to the accompanying drawings in which:

### BRIEF DESCRIPTION OF THE DRAWINGS

Fig. 1 is a constructional diagram showing an example of a printing apparatus according to an embodiment of the present invention;
Fig. 2 is a flowchart showing a processing procedure in the embodiment;
Fig. 3 is a diagram showing a structure of a printer; and

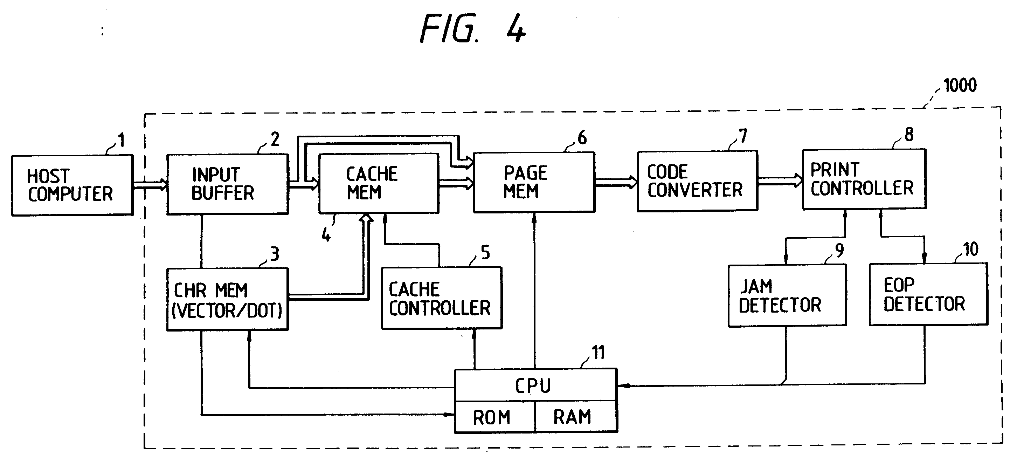

Fig. 4 is a constructional diagram showing an example of a printing apparatus according to another embodiment.

### DETAILED DESCRIPTION OF THE PREFERRED EMBODIMENTS

A preferred embodiment according to the present invention will be described in detail hereinbelow with reference to the drawings.

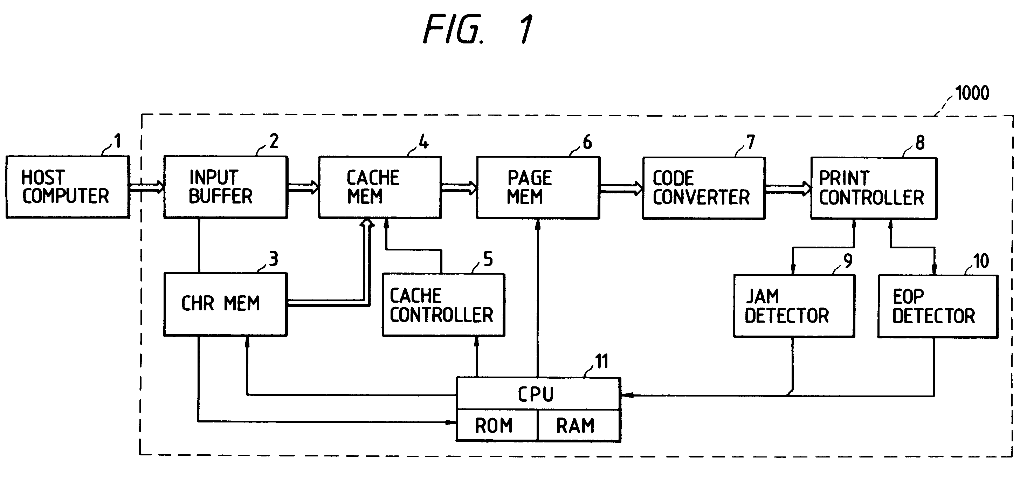

### (Description of the construction (Fig. 1))

Fig. 1 is a constructional diagram showing an example of a printing apparatus according to the invention. In the diagram, reference numeral 1 denotes a host computer to transmit various data and 1000 indicates a printer.

### (Constructional diagram of the printer 1000)

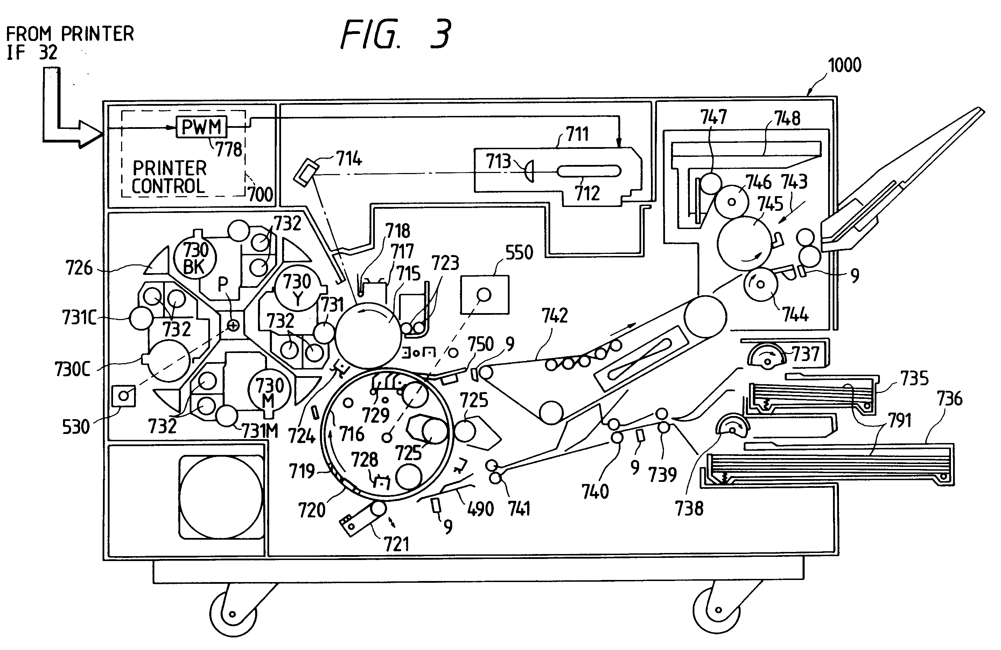

An outline of the printer 1000 shown in Fig. 1 will now be described with reference to Fig. 3. Reference numeral 778 denotes a pulse width modulator (PWM). The PWM 778 receives data from the host computer 1 shown in Fig. 1 through a printer interface (I/F) 32 and converts, for instance, a binary or multivalue digital image signal into an analog image signal and compares the analog image signal with a triangular wave of a predetermined period, thereby forming a pulse width modulation (PWM) signal. The PWM signal is supplied to a laser output section 711 at the post stage and utilized there to form a gradation image by on/off modulating a laser beam. Although a flow of data is omitted, it is practically shown in Fig. 1. Reference numeral 711 denotes a scanner comprising: a laser output section to convert the image signal from the PWM 778 into a photo signal; a polygonal mirror 712 of a polyhedron (for example, octahedron), a motor (not shown) to rotate the mirror 712; an f/θ lens (image forming lens) 713; and the like. Reference numeral 714 indicates a reflecting mirror to change a light path of a laser beam and 715 indicates a photo sensitive drum. The laser beam emitted from the laser output section is reflected by the polygonal mirror 712 and passes through the lens 713 and mirror 714 and linearly scans (raster scan) on the surface of the drum 715, thereby forming a latent image corresponding to an input image.

Reference numeral 717 indicates a primary charging device; 718 a whole surface exposing lamp; 723 a cleaner section to collect the residual toner which was not copy transferred; and 724 a pre-copy transfer charging device. Those components are arranged around the drum 715.

Reference numeral 726 denotes a developing unit to develop the electrostatic latent image formed on the surface of the photosensitive drum 715 by the laser exposure. Reference numerals 731Y, 731M, 731C, and 731Bk indicate developing sleeves which are come into contact with the drum 715 and directly develop the latent image; 730Y, 730M, 730C, and 730Bk represent toner hoppers to keep spare toners; and 732 denotes screws to transport a developing agent. The developing unit 726 is constructed by the sleeves 731Y to 731Bk, toner hoppers 730Y to 730Bk, and screws 732. Those components are arranged around a rotary shaft P of the developing unit. For instance, in the case of forming a yellow toner image, the yellow toner development is executed at the position shown in the diagram. When a magenta toner image is formed, the developing unit 726 is rotated around the shaft P as a rotational center in the diagram and the developing sleeve 731M in the magenta developing device is set at the position which is come into contact with the photo sensitive drum 715. The developments of the cyan and black toner image are also executed in a manner similar to the above. Although the above embodiment has been described with respect to a color printer, the invention can be also applied to a printer constructed by only the unit of black Bk or a printer to form a black and white pattern by using only the Bk unit.

Reference numeral 716 denotes a copy transfer drum to copy transfer the toner image formed on the photo sensitive drum 715 onto a paper; 719 indicates an actuator plate to detect a moving position of the copy transfer drum 716; 720 a home position sensor to detect that the copy transfer drum 716 has moved the home position when the actuator plate 719 approaches; 725 copy transfer drum cleaners; 727 a paper pressing roller; 728 a discharging device; and 729 a copy transfer charging device. The above components 719, 720, 725, 727, 728, and 729 are arranged around the copy transfer drum 716.

On the other hand, reference numerals 735 and 736 denote paper feed cassettes to enclose papers (cut sheets); 737 and 738 indicate paper feed rollers to feed the papers from the cassettes 735 and 736; and 739, 740, and 741 represent timing rollers for matching the timing to feed and convey the papers. The paper which was fed and conveyed through those components is led to a paper guide 749 and the front edge is grasped by a gripper, which will be explained hereinlater, and is wrapped around the copy transfer drum 716. Then, the processing routine advances to the image forming process.

Reference numeral 550 denotes a drum rotating motor for synchronously rotating the photo sensitive drum 715 and copy transfer drum 716. Reference numeral 750 indicates a peeling-off claw to peel off the paper from the copy transfer drum 716 after completion of the image forming process; 742 a conveying belt to convey the paper which was peeled off; and 743 an image fixing section to fix the paper which was conveyed by the conveying belt 742. The image fixing section 743 has a pair of thermal pressure rollers 744 and 745. Reference numeral 9 indicates a paper jam detector, which will be explained later. The jam detector 9 can be arranged at any position on the conveying path.

Returning to Fig. 1, reference numeral 2 indicates an input buffer to temporarily store the data from the host computer 1; 3 denotes a character information memory to store character information (for instance, vector coordinates, character pitch, attribute, etc.); 4 a cache memory to store the data which was converted into a bit map on the basis of the character information in the memory section 3; 5 a cache controller to write and clear the data in the cache memory 4; 6 a page memory for receiving the bit map data from the cache memory 4 and storing the data of one page; 7 a code converter for converting the bit map data from the page memory 6 into the video signal and outputting; 8 a print controller to control the printing operation on the basis of the video signal; 9 the jam detector to detect a paper jam which occurred in the print controller 8; 10 an end-of-print detector to detect the end of print in the print controller 8; and 11 a CPU to control the whole apparatus. The CPU 11 includes an ROM to store a processing procedure of the CPU, which will be explained hereinlater, and an RAM which is used as a work area.

### (Outline of the operation)

An outline of the operation of the printing apparatus in the embodiment with the above construction will now be described hereinbelow.

When print data or the like is input from the host computer 1, the data is accumulated in the input buffer 2. The vector coordinates, character pitch, attribute, etc. are extracted from the character information memory 3 and a bit map is developed on the basis of the accumulated data. Until a signal indicative of the end of print of the previous page by the print controller 8 is detected by the end-of-print detector 10 the cache controller 5 inhibits writing the bit map into the cache memory 4, thereby preventing the bit map data being broken. After that, when the end-of-print detector 10 detects the end of print of the image data of the page, the state of the cache memory 4 is discriminated and the writing operation is executed. If the area in the cache memory 4 is insufficient, the writing operation into the cache memory 4 is executed after the memory has been cleared. If the area in the cache memory still exists, the writing operation into the cache memory 4 is immediately performed. When an amount of data which was transferred from the cache memory 4 to the page memory 6 reaches the amount of one page, the print controller 8 is made operative so as to start the printing operation. On the other hand, the activated print controller 8 receives the bit map data which was converted into the video signal by the code converter 7 and starts the printing process. After that, upon completion of the printing process of one page, the page memory 6 is cleared to print the next page. If page data to be printed exists, the writing to the cache memory 4 is restarted.

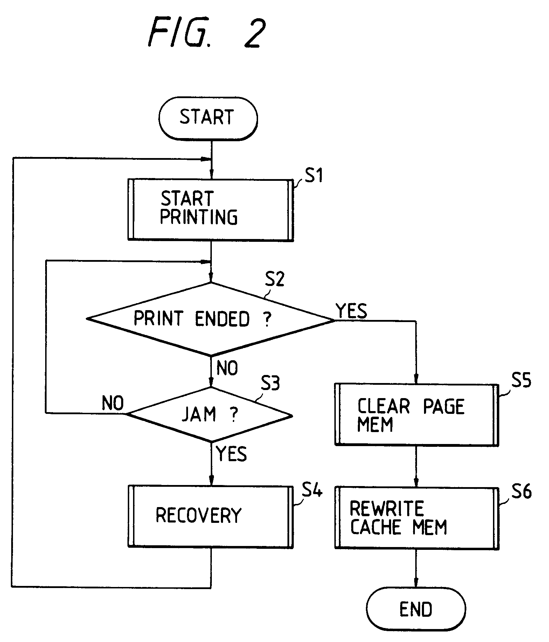

### (Description of the processing procedure (Fig. 2))

The processing procedure in the embodiment will now be described hereinbelow in accordance with the flowchart shown in Fig. 2.

As mentioned above, the data from the host computer 1 is stored into the input buffer 2 and serially processed. The character information is extracted from the character information memory 3 and developed to a bit map on the basis of the input data. Until the signal indicative of the end of printing operation of the data of the previous page by the print controller 8 is detected by the end-of-print detector 10, the cache controller 5 does not execute the writing operation to the cache memory 4. After that, when the end of printing operation of the page is detected by the end-of-print detector 10 and is informed to the cache controller 5 through the CPU 11, the state of the cache memory 4 is monitored. If the area in the cache memory 4 is insufficient, the writing operation to the cache memory 4 is executed after the memory 4 has been cleared. If capacity in the cache memory 4 is adequate, the writing operation to the cache memory is immediately executed. When an amount of data which was transferred from the cache memory 4 to the page memory 6 reaches the amount of one page, in step S1, the print controller 8 is activated so as to start the printing operation. That is, the bit map data of one page is converted into the video signal by the code converter 7 and transferred to the print controller 8. Next, when the print controller 8 starts the printing operation, rewriting of the cache memory 4 is prevented. In step S2, a check is made to see if the end-of-print signal has been input from the end-of-print detector 10 or not. In the next step S3, a check is made to see if a jam signal from the jam detector 9 has been input or not. If the paper jam has occurred, the processing routine advances to step S4. For instance, after an error was indicated or the data in the page memory 6 was regenerated (the character data of the page remains in the cache memory 4), the processing routine is returned to step S1 and the printing operation is restarted.

On the other hand, when the end of print signal is input from the end-of-print detector 10 in step S2, the processing routine advances to step S5 and the content of the page in the page memory 6 is cleared. In step S6, the data in the cache memory 4 can be rewritten. By the rewriting process, if necessary, the development into the cache memory 4 for the next page is started and the forming process of the data in the page memory 6 is started.

According to the embodiment, the rewriting of the data in the cache memory is executed after the data of the page was transferred to the print controller. Therefore, the operation of re-developing the bit map into the cache memory when trouble such as a paper jam in the print controller has occurred is not necessary.

In the embodiment, the content in the cache memory 4 for the next page cannot be rewritten until the completion of the printing process in the print controller 8. However, there is also considered a method whereby a plurality of cache memories 5 are prepared, bit map data are sequentially preliminarily developed, and when the printing process is finished in the print controller 8, the content of the corresponding cache memory 4 is updated.

As described above, by executing the writing and clearing operations to the cache memory synchronously with the printing operation, for instance, even if a paper jam or the like occurred, there is no need to execute the development to the cache memory and the process can be simplified.

### (Vector character and dot character mixedly exist)

The above embodiment has been described with respect to the case where the character in which the data of the input buffer 2 is expressed by the vector data stored in the character information memory 3 is converted to the dots and stored into the cache memory 4. However, there is also considered a case where vector characters and dot characters are stored in the character information memory 3 and a necessary pattern is properly obtained on the basis of the style, size, and deformation information. Therefore, there is considered a case where a pattern from the vector character and a pattern from the dot character mixedly exist in one page. When a jam occurred, to reconstruct the page, the pattern stored in the cache memory 4 is again used in a manner similar to the above. As a prerequisite, there is a fact that the time which is required to develop the dot character into the page memory is shorter than the time which is required in the case of converting the vector character into the dots and developing into the page memory.

Although the invention has been described in detail above, a laser beam printer, an ink jet printer (bubble jet printer: U.S.P. No. 4,520,373) having a full line head, or the like can be also used as a printer 1000 in the invention.

## Claims

1. An output apparatus comprising:
memory means (3) for storing coordinate point data defining a pattern;
conversion means (11) for converting the coordinate point data stored in said memory means into dot pattern data; and
storage means (6) for storing the dot pattern data for subsequent output by the apparatus, and characterised in that the apparatus additionally comprises temporary storage means (4) for temporarily storing dot pattern data converted by said conversion means, and means (5,11) for transferring dot pattern data stored in said temporary storage means to a predetermined area of said storage means (6) in the event that the dot pattern was not properly output from said apparatus due to jamming of said apparatus.

2. Apparatus according to claim 1, wherein said storage means stores one page of data to be output.

3. Apparatus according to either of claims 1 or 2, wherein said temporary storage means comprises a cache memory.

4. Apparatus according to any one of the preceding claims, wherein the dot pattern is output to a laser beam printer.

5. An output apparatus according to claim 1, wherein the dot pattern is output to a colour printer.

6. An output apparatus according to claim 1, wherein the dot pattern is output with ink.

7. A method of outputting data from an apparatus comprising the steps of:
converting coordinate point data indicative of a pattern into dot pattern data;
temporarily storing the converted dot pattern data; and
storing in storage means the converted dot pattern data for subsequent output by the apparatus, and characterised in that
the temporarily stored dot pattern data is transferred to the storage means in order to reconstruct the dot pattern in a predetermined area in the storage means in the event that the dot pattern was not properly output from the apparatus due to jamming in the apparatus.

8. A method according to claim 7, wherein the storage means stores one page of data to be output.

9. A method according to claim 7, wherein the converted dot pattern data is temporarily stored in a cache memory.

10. A method according to claim 7, wherein the dot pattern is output with a laser beam printer.

11. A method according to claim 7, wherein the dot pattern is output with a colour printer.

## Patentansprüche

1. Ausgabegerät mit
einer Speichereinheit (3) zur Speicherung von ein Muster definierenden Punktkoordinatendaten,
einer Umwandlungseinrichtung (11) zur Umwandlung der in der Speichereinheit gespeicherten Punktkoordinatendaten in Punktmusterdaten, und
einer Speichereinrichtung (6) zur Speicherung der Punktmusterdaten zur darauffolgenden Ausgabe durch das Gerät,
**gekennzeichnet durch**
eine Zwischen-Speichereinrichtung (4) zur Zwischenspeicherung von durch die Umwandlungseinrichtung umgewandelten Punktmusterdaten, und
Einrichtungen (5, 11) zur Übertragung von in der Zwischen-Speichereinrichtung gespeicherten Punktmusterdaten zu einem vorbestimmten Bereich der Speichereinrichtung (6) für den Fall, daß das Punktmuster aufgrund von Gerätestörungen nicht richtig von dem Gerät ausgegeben wurde.

2. Gerät nach Anspruch 1,
**dadurch gekennzeichnet, daß**
die Speichereinrichtung eine Seite auszugebender Daten speichert.

3. Gerät nach Anspruch 1 oder 2,
**dadurch gekennzeichnet, daß**
die Zwischen-Speichereinrichtung einen Cache-Speicher hat.

4. Gerät nach einem der vorangehenden Ansprüche,
**dadurch gekennzeichnet, daß**
das Punktmuster an einen Laserdrucker ausgegeben wird.

5. Gerät nach Anspruch 1,
**dadurch gekennzeichnet, daß**
das Punktmuster an einen Farbdrucker ausgegeben wird.

6. Gerät nach Anspruch 1,
**dadurch gekennzeichnet, daß**
das Punktmuster mittels Tinte ausgegeben wird.

7. Verfahren zur Ausgabe von Daten aus einem Gerät mit den Schritten
Umwandeln von ein Muster darstellenden Punktkoordinatendaten in Punktmusterdaten,
Zwischenspeichern der umgewandelten Punktmusterdaten, und
Speichern der umgewandelten Punktmusterdaten in einer Speichereinrichtung zur darauffolgenden Ausgabe durch das Gerät,
**dadurch gekennzeichnet, daß**
die zwischengespeicherten Punktmusterdaten zu der Speichereinrichtung übertragen werden, um das Punktmuster in einem vorbestimmten Bereich der Speichereinrichtung für den Fall wiederherzustellen, daß das Punktmuster aufgrund von Gerätestörungen nicht richtig von dem Gerät ausgegeben wurde.

8. Verfahren nach Anspruch 7,
**dadurch gekennzeichnet, daß**
die Speichereinrichtung eine Seite auszugebender Daten speichert.

9. Verfahren nach Anspruch 7,
**dadurch gekennzeichnet, daß**
die umgewandelten Punktmusterdaten in einem Cache-Speicher zwischengespeichert werden.

10. Verfahren nach Anspruch 7,
**dadurch gekennzeichnet, daß**
das Punktmuster mittels eines Laserdruckers ausgegeben wird.

11. Verfahren nach Anspruch 7,
**dadurch gekennzeichnet, daß**
das Punktmuster mittels eines Farbdruckers ausgegeben wird.

## Revendications

1. Appareil de sortie, comprenant :
des moyens de mémoire (3) pour enregistrer des données de points de coordonnées définissant une configuration;
des moyens de conversion (11) pour convertir les données de points de coordonnées enregistrées dans les moyens de mémoire en données de configuration de points; et
des moyens d'enregistrement (6) pour enregistrer les données de configuration de points pour que l'appareil les présente ultérieurement en sortie, et caractérisé en ce que l'appareil comprend en outre des moyens d'enregistrement temporaire (4) pour enregistrer temporairement des données de configuration de points qui sont converties par les moyens de conversion, et des moyens (5, 11) pour transférer vers une zone prédéterminée des moyens d'enregistrement (6) les données de configuration de points qui sont enregistrées dans les moyens d' enregistrement temporaire, dans le cas où la configuration de points n'a pas été présentée correctement en sortie par l'appareil, du fait d'un bourrage de l'appareil.

2. Appareil selon la revendication 1, dans lequel les moyens d'enregistrement enregistrent une page de données à présenter en sortie.

3. Appareil selon l'une quelconque des revendications 1 et 2, dans lequel les moyens d'enregistrement temporaire comprennent une antémémoire.

4. Appareil selon l'une quelconque des revendications précédentes, dans lequel la configuration de points est émise vers une imprimante laser.

5. Appareil de présentation en sortie selon la revendication 1, dans lequel la configuration de points est émise vers une imprimante en couleurs.

6. Appareil de présentation en sortie selon la revendication 1, dans lequel la configuration de points est présentée en sortie avec de l'encre.

7. Procédé pour présenter en sortie des données provenant d'un appareil, comprenant les étapes suivantes :
on convertit des données de points de coordonnées représentatives d'une configuration en données de configuration de points;
on enregistre temporairement les données de configuration de points converties; et
on enregistre dans des moyens d' enregistrement les données de configuration de points converties, pour que l'appareil les présente en sortie ultérieurement, et caractérisé en ce que
les données de configuration de points enregistrées temporairement sont transférées vers les moyens d'enregistrement dans le but de reconstruire la configuration de points dans une zone prédéterminée des moyens d' enregistrement, dans le cas où la configuration de points n'a pas été correctement présentée en sortie par l'appareil, à cause d'un bourrage dans l'appareil.

8. Procédé selon la revendication 7, dans lequel les moyens d' enregistrement enregistrent une page de données à présenter en sortie.

9. Procédé selon la revendication 7, dans lequel les données de configuration de points converties sont enregistrées temporairement dans une antémémoire.

10. Procédé selon la revendication 7, dans lequel la configuration de points est présentée en sortie avec une imprimante laser.

11. Procédé selon la revendication 7, dans lequel la configuration de points est présentée en sortie avec une imprimante en couleurs.
